Europäisches Patentamt

European Patent Office

Office européen des brevets

(19)

(11) Veröffentlichungsnummer: **0 020 897**
**B1**

(12) **EUROPÄISCHE PATENTSCHRIFT**

(45) Veröffentlichungstag der Patentschrift: **16.11.83**

(51) Int. Cl.³: **G 06 K 9/20, H 04 N 1/02**

(21) Anmeldenummer: **80101915.9**

(22) Anmeldetag: **10.04.80**

(54) Vorrichtung zur Bestimmung des optimalen Abtastwinkels von Druckschriften.

(30) Priorität: **26.06.79 CH 5939/79**

(43) Veröffentlichungstag der Anmeldung:
**07.01.81 Patentblatt 81/1**

(45) Bekanntmachung des Hinweises auf die Patenterteilung:
**16.11.83 Patentblatt 83/46**

(84) Benannte Vertragsstaaten:
**DE FR GB**

(56) Entgegenhaltungen:
**DE - A - 2 443 265**
**FR - A - 2 284 862**
**US - A - 3 701 098**
**US - A - 3 831 146**
**US - A - 4 097 750**

(73) Patentinhaber: **International Business Machines Corporation**
**Old Orchard Road**
**Armonk, N.Y. 10504 (US)**

(72) Erfinder: **Chevillat, Pierre**
**Breitenstrasse 17**
**CH-8134 Adliswil/ZH (CH)**
Erfinder: **Schindler, Hans Rudolf**
**Wildenbühlstrasse 40**
**CH-8135 Langnau/ZH (CH)**

(74) Vertreter: **Schröder, Otto, Dr. Ing.**
**Säumerstrasse 4**
**CH-8803 Rüschlikon (CH)**

Courier Press, Leamington Spa, England.

# 0 020 897

## Vorrichtung zur Bestimmung des optimalen Abtastwinkels von Druckschriften

Die Erfindung bezieht sich auf eine Vorrichtung zur Bestimmung des optimalen Abtastwinkels von Druckschriften. Sie weist einen Sensor auf, auf den die Druckschriften mittels eines optischen Systems abgebildet werden.

Solche Vorrichtungen werden benötigt, um, vor der eingentlichen Abtastung der Schriftzeichen, die unsprüngliche, mehr oder weniger willkürliche, Lage des Schriftstücks relativ zur Abtasteinrichtung zu ermitteln. Der ermittelte Wert wird benutzt, um das Schriftstück vor der Abtastung in eine relativ zur Abtasteinrichtung optimale Lage zu bringen.

Derartige Vorrichtungen finden beispielsweise bei maschinellen Lesegeräten oder bei Faksimile-Uebertragungseinrichtungen Verwendung, bei denen eine Ausrichtung in die optimale Lage von grossem Vorteil ist. Entweder lässt sich der Aufwand für die Abtastung oder Zeichenerkennung sowie gegebenfalls die erforderliche Bandbreite von Uebertragungskanälen stark reduzieren, oder es wird, bei gleichem Aufwand, eine erhebliche Verbesserung der Qualität bzw. Zuverlässigkeit erreicht.

Eine Vielzhal von Abtastvorrichtungen sowie im Zusammenhang mit diesen verwendete Ausrichteanordnungen sind entwickelt und beispielsweise in den folgenden Publikationen beschrieben worden: US Patent 3.457.422 "Optical System Adapted for Rotation of an Image to be Scanned with Reference to a Scanning Path", US Patent 3.831.146 "Optimum Scan Angle Determining Means", IBM Technical Disclosure Bulletin Vol. 14, No. 7 (1971), pp. 2201—2203 "General Line Centering with Optical Video Consolidation", und A. I. Tersoff's Artikel "Automatic Registration in High-Speed Character Sensing Equipment", veröffentlicht in Proceedings Eastern Joint Computer Conference 1957, pp. 238—242. Ohne beträchtliche Aenderungen eignen sich diese vorbekannten Vorrichtungen jedoch nicht zur Ermittlung des optimalen Abtastwinkels von Druckschriften.

Im IBM Technical Disclosure Bulletin Vol. 1, No. 1 (1958), wurde ein Artikel "Skew Compensator" publiziert, der eine Einrichtung zur Ermittlung der Zeilenrichtung von abzutastenden Druckschriften mit automatischer Ausrichtung der Abtastsensoren zeigt. Hier ist jedoch eine auf den abzutastenden Schriftstücken zusätzlich aufzubringende Referenzlinie erforderlich. Der Betrieb ist zudem zeitaufwendig und für Abtastanordnungen moderner Technologie nicht mehr geeignet.

Der Erfindung erlaubt es, die gennannten Nachteile zu vermeiden. Die Vorrichtung zur Bestimmung des optimalen Abtastwinkels ist gekennzeichnet durch einen Sensor, der eine Vielzahl von parallelen, aus lichtempfindlichem Material bestehende Streifen Si aufweist, die Signale $S_i'$ abgeben können, welche jeweils der Intensität des vom entsprechenden streifenförmigen Sektor der Druckschrift reflektierten Lichtes entsprechen, durch Schaltungen zur Erzeugung von Signalen $\Delta_j$, welche jeweils der Differenz der Signale entsprechen, die von Paare bildenden Steifen abgegeben werden, wobei die ein Paar bildenden Streifen jeweils durch mindestens einen anderen Streifen getrennt sind, und zur Bildung von Funktionswerten

$$f(\Delta_j) = \sum_{K=0}^{N} c_K \, | \, \Delta_j{}^K \, |$$

für jedes der Differenzsignale $\Delta_j$, wobei N und $c_K$ vorbestimmte Konstanten sind, und zur Akkumulierung sämtlicher Funktionswerte $f(\Delta_j)$, und durch Mittel, mit deren Hilfe Sensor und Druckschrift relativ zueinander gedreht werden können.

Ferner können zur Speicherung des optimalen Abtastwinkels vorgesehen werden: ein Winkelsignalgeber, der der Winkellage des Sensors relativ zu einer Referenzachse entsprechende Winkelsignale abgibt, eine Vergleichsschaltung, die ein Steuersignal abgibt, solange das ihr zugeführte akkumulierte Funktionssignal ansteigt, und ein mit der Vergleichsschaltung und dem Winkelsignalgeber verbundenes Register, in welches die Winkelsignale eingegeben werden, solange das Steuersignal vorhanden ist.

Die durch die Erfindung erreichten Vorteile sind im wesentlichen darin zu sehen, dass die gestellte Aufgabe, nämlich die Ermittlung der Zeilenrichtung relativ zur Abtastrichtung, mit einer wenig aufwendigen, opto-mechanischen Einrichtung sowie einer ebenfalls einfachen elektronischen Schaltung gelöst wird. Ferner erlaubt es die Vorrichtung nacheinander une ohne dass Justierungen während des Betriebs erforderlich werden Druckschriften zur verarbeiten, die hinsichtlich Zeilenabstand und -länge, Schriftzeichengrösse und Ort der Beschriftung sehr unterschiedlich sein können. Die ermittelten Winkelwerte sind von grosser Genauigkeit und bleiben bis zu ihrer Verwendung, d.h. bis zur Ausrichtung von Schriftstück und Abtasteinrichtung relativ zueinander, gespeichert verfügbar.

Im folgenden wird die Erfindung anhand von Ausführungsbeispiele darstellenden Zeichnungen näher erläutert. Es zeigen:

Fig. 1 eine schematische Darstellung des opto-mechanischen Teils der erfindungsgemässen Vorrichtung,

Fig. 2 eine erfindungsgemässe elektrische Schaltung zur Auswertung der von der Vorrichtung nach Fig. 1 abgegebenen elektrischen Signale,

Fig. 3 eine Prinzipskizze sur Verdeutlichung der zur Ermittlung des optimalen Abtastwinkels vorgenommenen Drehung des Sensors relativ zur Druckschrift,

Fig. 4 den Verlauf der Spannung V der Schaltung nach Fig. 2 in Abhängigkeit vom von der Sensorlängsachse und einer Referenzachse gebildeten Winkel,

Fig. 5 die elektrische Schaltung einer zweiten Ausführungsform der erfindungsgemässen Vorrichtung, und

Fig. 6 die elektrische Schaltung einer dritten Ausführungsform der erfindungsgemässen Vorrichtung.

Die nachfolgend beschriebene Vorrichtung kann im Zusammenhang mit Geräten zur maschinellen Erfassung von auf Schriftstücken zeilenweise angeordneten Schriftzeichen Verwendung finden. Normalerweise ist es am günstigsten, die Abtastung zur Erfassung der Schriftzeichen parallel oder senkrecht zur Zeilenrichtung vorzunehmen. Wenn daher das Schriftstück der Abtastvorrichtung nicht "gerade" zugeführt wird oder die Zeilen auf dem Schriftstück nicht horizontal verlaufen, wird eine Korrektur der Lage des Schriftstücks relative zur Abtastvorrichtung wünschenswert oder erforderlich.

Die hier vorgeschlagene Vorrichtung dient zur Ermittlung und Speicherung des Winkels zwischen tatsächlicher und optimaler Zeilenrichtung. Der ermittelte Wert kann dann benutzt werden, um, durch Drehung von Druckschrift bzw. Abtasten oder durch optische Massnahmen, die Korrektur auszuführen und so eine optimale Abtastung zu gewährleisten.

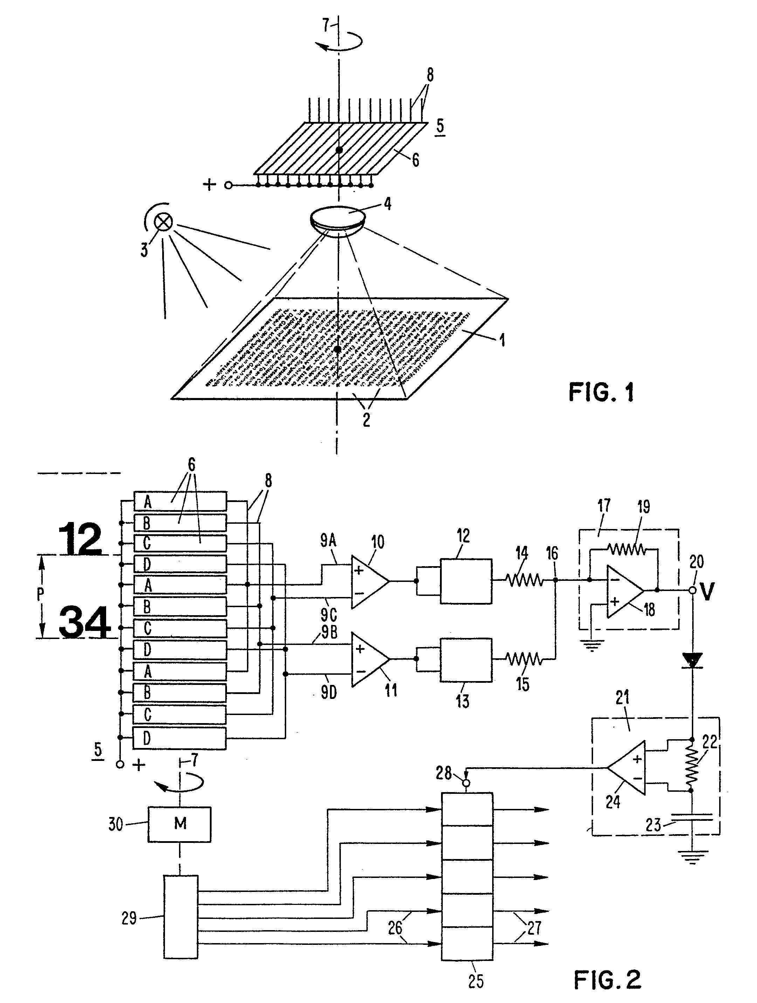

In Fig. 1 ist der opto-mechanische Teil eines Ausführungsbeispiels der Erfindung schematisch dargestellt. Mit 1 ist das abzutastende, Druckzeilen 2 aufweisende Schriftstück bezeichnet. Es wird von einer Lichtquelle 3 beleuchtet und durch ein Linsensystem 4 auf eine mit einer lichtempfindlichen Schicht versehene Sensorplatte 5 abgebildet. Diese Schicht ist in parallele, voneinander isolierte Streifen 6 unterteilt, die einseitig mit einer Betriebsspannung "+" verbunden sind. Diese Streifen bestehen beispielsweise aus einem Photoleiter-Material, dessen elektrischer Widerstand vom auffallenden Licht abhängt. Ueber Anschlussleitungen 8 können die Streifen somit elektrische Signale abgeben, die dem vom entsprechenden Streifenabschnitt des Schriftstücks reflektierten Licht entsprechen.

In einem praktischen Ausführungsbeispiel können beispielsweise 80 Streifen auf einer Platte mit den Abmessungen $8 \times 12$ mm verwendet werden. Im ersten Ausführungsbeispiel entspricht die Breite von 4 Streifen dem Zeilenabstand p (Fig. 2) des auf dem Sensor abgebildeten Schriftbildes.

Zur Bestimmung der Zeilenrichtung auf dem Schriftstück wird die zur Schriftstückebene parallel angeordnete Sensorplatte 5 mittels einer in Fig. 1 nicht gezeigten Antriebsvorrichtung um eine zur Schriftstückebene senkrechte Achse 7 gedreht. Die hierbei von den auf der Platte angeordneten lichtempfindlichen Streifen abgegebenen elektrischen Signale werden einer Auswerteschaltung zugeführt, deren Ausgangssignal ein deutliches Maximum erreicht, sobald Streifen und Schriftstückzeilen parallel verlaufen. Die Abweichung der diesem maximalen Ausgangswert entsprechenden Zeilenrichtung von der optimalen Lage wird registriert. Die hierfür erforderlichen Schaltungen und Vorgänge werden im folgenden anhand der Fig. 2, 3 und 4 näher beschrieben.

Fig. 2 zeigt die elektrische Schaltung, wobei die Darstellung auf die wesentlichen Schaltungselemente beschränkt ist. Der Uebersichtlichkeit halber wurden für die Erfindung nicht grundsätzlich wichtige zusätzliche Elemente weggelassen, die, für den Fachmann offensichtlich, im praktischen Einsatz beispielsweise für Synchronisationszwecke erforderlich werden können.

Im in Fig. 2 gezeigten Ausführungsbeispiel sind die Streifen 6 der Sensorplatte 5 fortlaufend mit den Buchstaben A, B, C, D, A, B, etc. bezeichnet. Die Ausgangsleitungen 8 aller mit dem gleichen Buchstaben versehenen Streifen sind verbunden. Ueber Leitung 9A sind sodann alle Streifen A an den ersten Eingang eines Operationsverstärkers 10 gelegt, an dessen zweiten Eingang die Streifen C über die Leitung 9C angeschlossen sind. Entsprechend sind die Streifen B und D über die Leitungen 9B und 9D mit den beiden Eingängen eines zweiten Operationsverstärkers 11 verbunden. Die jeweils der Differenz der Eingangssignale entsprechenden Ausgangssignale der Operationsverstärker 10 und 11 werden den Eingängen nachgeschalteter arithmetischer Schaltungen 12 bzw. 13 zugeführt, in welchen, im Ausführungsbeispiel, die Differenzsignale quadriert werden.

Die Ausgangsströme dieser Quadrierschaltungen werden über die Widerstände 14 bzw. 15 der Eingangsklemme 16 einer Summierverstärkerschaltung 17 zugeführt, die in bekannter Weise aus einem über den Widerstand 19 rückgekoppelten Operationsverstärker 18 gebildet wird.

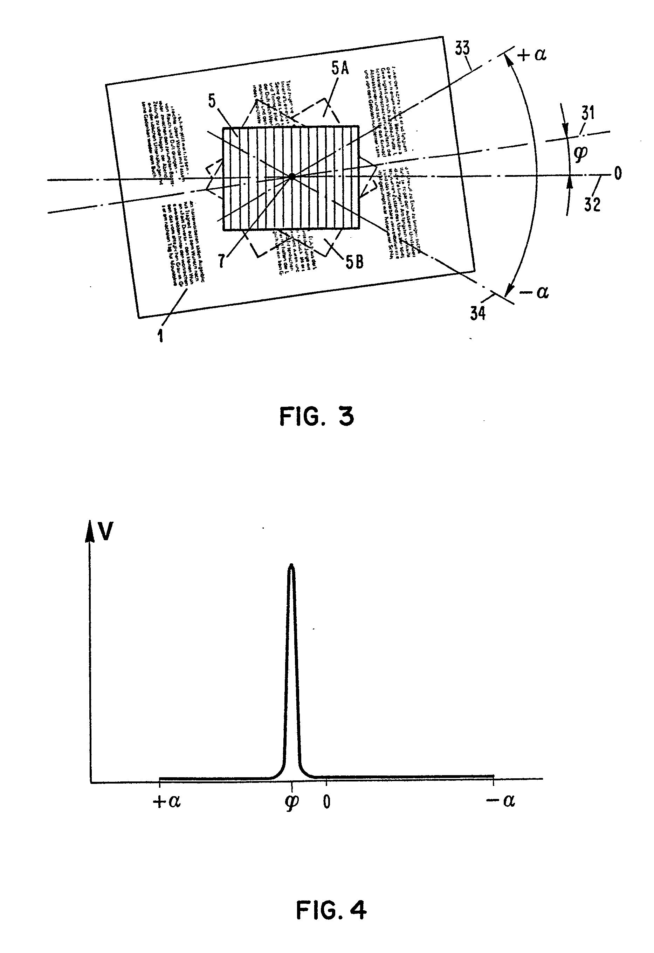

Wie im folgenden anhand der Fign. 3 und 4 erläutert werden wird, ist die an der Ausgangsklemme 20 der Summierschaltung 17 messbare Spannung V stark abhängig von der relativen Lage der Sensorstreifen 6 zur Druckzeilenrichtung.

Fig. 3 zeigt schematisch eine Draufsicht der Druckschrift 1 und des parallel darüber angeordneten, um die Achse 7 drehbaren Sensors 5, auf den die Druckschrift mittels des in Fig. 3 nicht gezeigten Linsensystems verkleinert aber winkelgetreu abgebildet wird. Fig. 4 stellt den Verlauf der Spannung V, an der Ausgangsklemme 20 gemessen, in Abhängigkeit von der Winkellage des Sensors zu einer durch die verwendete Abtasteinrichtung gegebenen Mittelachse dar. Es sei angenommen, dass, wie in Fig. 3 dargestellt, die Längsachse 31 des Schriftstücks 1 mit der genannten Mittelachse 32 den Winkel $\varphi$ bildet, während die Längsachse des Sensors 5 in dessen ausgezogen dargestellter Mittellage parallel zur Mittelachse 32 verläuft.

Aufgabe der erfindungsgemässen Einrichtung ist es, den Winkel $\varphi$ zu bestimmen. Dies geschieht mit der in Fig. 1 und 2 gezeigten Anordnung wie folgt: der Sensor wird zunächst in die in Fig. 3 gestrichelt dargestellte Lage 5A gebracht, in der die Sensorlängsachse die mit 33 gekennzeichnete Lage einnimmt, mit der Mittelachse 32 also den Winkel $+\alpha$ bildet. Sodann wird der Sensor um den Winkel $2\alpha$ im Uhrzeigersinn in die zweite gestrichelte Lage 5B gedreht, in welcher die Sensorlängsachse die mit 34 gekennzeichnete Lage einnimmt und mit der Mittelachse 32 den Winkel $-\alpha$ bildet. Die Ausgangsspannung V zeigt hierbei das in Fig. 4 dargestellte Verhalten: Ein eindeutiges Spannungsmaximum tritt auf, wenn die Sensorstreifen parallel zur Druckzeilenrichtung liegen. Sofern die Zeilen auf der Druckschrift horizontal, d.h. senkrecht zur Längsachse der Druckschrift verlaufen, fällt gleichzeitig die Sensorlängsachse mit der Längsachse 31 des Schriftstücks 1 zusammen. Im restlichen Bereich $+\alpha$ bis $-\alpha$, wobei $\alpha$ etwa gleich 20° sein kann, ist die Spannung sehr gering. Nebenmaximalwerte liegen unterhalb 5% des Maximalwertes. Das scharfe Spannungsmaximum ermöglicht eine Bestimmung des Winkels $\varphi$ mit einer Genauigkeit von etwa $\pm0,2°$.

Der im unteren Teil der Fig. 2 gezeigte Schaltungsteil dient zur Ermittlung und Speicherung des Winkels $\varphi$, bei dem das an der Ausgangsklemme 20 gemessene Signal V bei der oben erläuterten Drehung des Sensors gegenüber dem Schriftstück den Maximalwert erreicht. Die Klemme 20 ist über eine Diode mit einer Vergleichsschaltung 21 verbunden, die ein positives Ausgangssignal abgibt, solange die Eingangsspannung V ansteigt. Zu diesem Zweck wird das Eingangssignal über einen Widerstand 22 einem Kondensator 23 zugeführt, der auf der andern Seite mit Erdpotential verbunden ist. Solange die Spannung V ansteigt wird der Kondensator aufgeladen, und der Aufladestrom erzeugt am Widerstand einen Spannungsabfall. Der Ausgang eines mit seinen Eingängen parallel zum Widerstand 22 geschalteten Operationsverstärkers 24 bleibt positiv solange der Kondensator 23 aufgeladen wird.

Mit 25 ist ein mehrstufiges Register bezeichnet, das zur Speicherung binärer Werte geeignet ist. Diese können über Leitungen 26 parallel in die Stufen dieses Registers eingelesen und über Leitungen 27 ausgelesen werden. Die Ausgangsspannung der Vergleichsschaltung 21 steuert das Einlesen von über die Leitung 26 eintreffenden binären Signalen. Die Einspeicherung erfolgt, sofern am Eingang 28 des Registers eine positive Spannung liegt.

Die Leitungen 26 sind an einen Winkelsignalgeber 29 angeschlossen, der synchron mit der durch die Antriebsvorrichtung 30 erfolgenden Drehung des Sensors 5 um die Achse 7 fortlaufend digitale elektrische Signale abgibt, die dem jeweiligen Winkel zwischen der Sensorlängsachse und der Mittelachse 32 (Fig. 3) entsprechen.

Gemäss dem in Fig. 3 dargestellten Schema werden bei der Drehung des Sensors 5 aus der Lage 5A in die Lage 5B zunächst der Winkelwert $+\alpha$ und dann abnehmende Winkelwerte auf die Leitungen 26 gegeben bis der Winkelwert $-\alpha$ erreicht ist. Diese Winkelwerte werden fortlaufend im Register 25 gespeichert bis beim Winkel $\varphi$ die maximale Spannung V erreicht wird. Der zu diesem Zeitpunkt gespeicherte Winkelwert bleibt im Register 25 gespeichert, da mit abfallendem V-Wert das positive Potential am Eingang 28 verschwindet. Die den Eingangleitungen 26 später zugeführten digitalen Winkelwerte beeinflussen den im Register gespeicherten Wert nicht.

Nach Abschluss der Drehabtastung ist somit der gesuchte Winkelwert $\varphi$ im Register 25 enthalten. Er kann über Leitungen 27 ausgelesen und beispielsweise dazu benutzt werden das Schriftstück oder den Sensor so auszurichten, dass der eingentliche Abtast- oder Lesevorgang unter einem optimalen Winkel erfolgen kann.

Im bisher beschriebenen ersten Ausführungsbeispiel war eine bestimmte Relation zwischen dem Zeilenabstand der Schriftstückabbildung auf der Sensorplatte und den Abmessungen der Sensorstreifen vorausgesetzt. Wie erwähnt, entsprach die Breite von 4 Streifen dem Zeilenabstand. Mit dieser Einschränkung sind die Anwendungsmöglichkeiten der erfindungsgemässen Vorrichtung relativ begrenzt, da beim Wechsel zu Schriftstücken anderer oder sogar unbekannter Zeilenabstände zumindest eine Umschaltung oder eine neue Justierung erforderlich wird.

Es hat sich jedoch gezeigt, dass die Zahl der Streifen pro Zeile weder gleich 4 noch überhaupt gleich einer ganzzahligen Zahl sein muss. Die in Fig. 4 gezeigte charakteristische Spannungskurve mit dem ausgeprägten Maximum kann auch mit anderen Relationen Streifenzahl-Zeilenabstand erreicht werden.

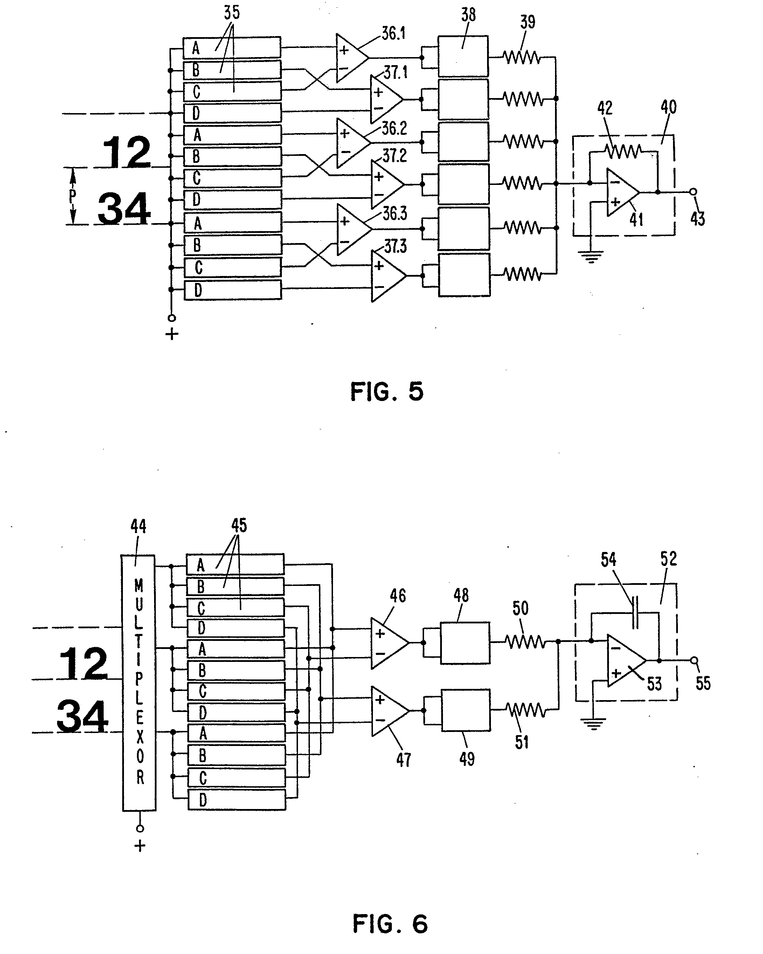

So z.B. mit der in Fig. 5 gezeigten Schaltungsanordnung, die im Zusammenhang mit der in Fig. 1 dargestellten opto-mechanischen Anordnung für Druckschriften mit praktisch beliebigem Zeilenabstand verwendet werden kann. Im Prinzip gleicht die Schaltung der Fig. 5 weitgehend jener der Fig. 2, jedoch sind die mit gleichen Buchstaben bezeichneten Streifen 35 nicht miteinander verbunden. Hingegen ist für jede Streifenvierergruppe A, B, C, D jeweils ein Paar von Operationsverstärkern 36.1 und 37.1, 36.2 und 37.2, bzw. 36.3 und 37.3 vorgesehen. Die Ausgänge dieser Operationsverstärker werden, entsprechend der Anordnung in Fig. 2, über zugeordnete Quadrierschaltungen 38 sowie nachgeschaltete Widerstände 39 dem Eingang eines Summierverstärkers 40 zugeführt, der wiederum aus einem über den Widerstand 42 rückgekoppelten Operationsverstärker 41 besteht.

Wird der Sensor, wie im Zusammenhang mit dem ersten Ausführungsbeispiel ausführlich beschrieben, gegenüber dem Schriftstück von $+\alpha$ auf $-\alpha$ gedreht, so zeigt die an der Ausgangsklemme 43 messbare Spannung im wesentlichen wieder den in Fig. 4 dargestellten Verlauf. Für die Erfassung und Speicherung des gesuchten Winkels $\varphi$ kann der im unteren Teil der Fig. 2 dargestellte und dort mit

**0 020 897**

der Ausgangsklemme 20 verbundene Schaltungsteil verwendet werden. Er ist mit der Klemme 43 zu verbinden.

Eine weitere Ausführungsform der erfindungsgemässen Vorrichtung ist in Fig. 6 dargestellt. Auch hier ist keine bestimmte Relation Streifenzahl-Zeilenabstand vorgeschrieben, jedoch sind die mit gleichen Buchstaben bezeichneten Streifen 45 wiederum miteinander verbunden, und, ähnlich wie in Fig. 2, an ein einziges Operationsverstärkerpaar 46 und 47 angeschlossen. Die erforderliche Betriebsspannung "+" wird über einen Multiplexor 44 den Streifenvierergruppen A, B, C, D zyklisch nacheinander zugeführt. Das Operationsverstärkerpaar 46 und 47 sowie die anschliessenden Quadrierschaltungen 48 und 49 und die Widerstände 50 und 51 werden auf diese Weise von sämtlichen Streifenvierergruppen zeitlich nacheinander benutzt. Der in Fig. 2 verwendete Summierverstärker 17 wird durch eine Integrationsschaltung 52 ersetzt, die aus einem über den Kondensator 54 rückgekoppelten Operationsverstärker 53 besteht.

Bei der Drehung des Sensors resultiert an der Ausgangsklemme 55 wiederum die charakteristische Kurve, die in Fig. 4 wiedergegeben wurde. Auch für dieses Ausführungsbespiel kann die gleiche Schaltung für die Erfassung und Speicherung des gesuchten Winkels $\varphi$ Anwendung finden, die im Zusammenhang mit Fig. 2 beschrieben wurde. Sie ist mit der Klemme 55 zu verbinden.

Der Uebersichtlichkeit halber werden nachfolgend einige allen Ausführungsbeispielen gemeinsame wesentliche Merkmale der Erfindung noch einmal in allgemeiner Form herausgestellt.

Erstens werden die Sensorstreifen 6 paarweise an die Eingänge nachfolgender, die Differenz der Eingangssignale bildenden Schaltungen angeschlossen. Die Paare werden, allgemein ausgedrückt, durch die Streifen $S_i$ und $S_{i+D}$ gebildet, wobei in den gezeigten Ausführungsbeispielen D=2 war. D kann jedoch auch größer 2 gewählt werden.

Zweitens werden die Differenzsignale arithmetischen Schaltungen zugeführt, die verallgemeinert die folgende Funktion ausüben:

$$f(\Delta_j)=C_0+C_1|\Delta_j|+C_2|\Delta_j|^2+C_3|\Delta_j|^3+C_4|\Delta_j|^4+ \tag{1}$$

oder

$$f(\Delta_j)=\sum_{K=0}^{N} c_K \cdot |\Delta_j^K| \tag{2}$$

wobei $c_K$ eine vorgegebene Konstante ist. In den Ausführungsbeispielen wurden Quadrierschaltungen (12, 13; 38; 48, 49) verwendet, wodurch die Gleichung (2) reduziert wird auf

$$f(\Delta_j)=c_2|\Delta_j|^2 \tag{3}$$

Schliesslich werden sämtliche Funktionswerte $f(\Delta_j)$ in Akkumulierschaltungen (17, 40, 52) addiert bzw. integriert.

**Patentansprüche**

1. Vorrichtunng zur Bestimmung des optimalen Abtastwinkels von Druckschriften mit einem Sensor (5), auf den die Druckschriften (1) mittels eines optischen Systems (4) abgebildet werden, gekennzeichnet durch einen Sensor (5), der eine Vielzahl von parallelen, aus lichtempfindlichem Material bestehende Streifen $S_i$ (6) auf weist, die Signale $S'_i$ abgeben können, welche jeweils der Intensität des vom entsprechenden streifenförmigen Sektor der Druckschrift reflektierten Lichtes entspricht, durch Schaltungen zur Erzeugung (10, 11) von Signalen $\Delta_j$, welche jeweils der Differenz der Signale entsprechen, die von Paare bildenden Streifen abgegeben werden, wobei die ein Paar bildenden Streifen jeweils durch mindestens einen anderen Streifen getrennt sind, zur Bildung (12, 13) von Funktionswerten

$$f(\Delta_j)=\sum_{K=0}^{N} c_K |\Delta_j^K|$$

für jedes der Differenzsignale $\Delta_j$, wobei N und $c_K$ vorbestimmte Konstanten sind, und zur Akkumulierung (17) sämtlicher Funktionswerte $f(\Delta_j)$, und durch Mittel (30), mit deren Hilfe der Sensor (5) und die Druckschrift (1) relativ zueinander gedreht werden können.

2. Vorrichtung nach Patentanspruch 1, gekennzeichnet durch einen Winkelsignalgeber (29), der der Winkellage des Sensors (5) relative zu einer Referenzachse (32) entsprechende Winkelsignale abgibt, eine Vergleichsschaltung (21), die ein Steuersignal abgibt, solange das ihr von der die Funktionswerte $f(\Delta_j)$ akkumulierenden Schaltung (17) zugeführte Signal ansteigt, und durch ein mit der Vergleichsschaltung (21) und dem Winkelsignalgeber (29) verbundenes Register (25), in welches die Winkelsignale eingegeben werden, solange das Steuersignal vorhanden ist.

5

3. Vorrichtung nach Patentanspruch 1, dadurch gekennzeichnet, dass die ein Paar bildenden Streifen jeweils durch einen anderen Streifen getrennt sind.

4. Vorrichtung nach Patentanspruch 1, dadurch gekennzeichnet, dass die den Funktionswert bildende Schaltung eine Quadrierschaltung ist.

5. Vorrichtung nach Patentanspruch 1, dadurch gekennzeichnet, dass die Streifen $S_i$ zu Streifengruppen A, B, C, D zusammengefasst sind, wobei die Streifen $S_{i+4x}$ untereinander verbunden sind, mit=1, 2, 3, 4 jeweils für Streifengruppen A, B, C, D und mit x=0, 1, 2, 3, u.s.w.

6. Vorrichtung nach Patentanspruch 1, dadurch gekennzeichnet, dass die lichtempfindlichen Streifen einzeln oder gruppenweise zeitlich aufeinanderfolgend über einen Multiplexor (44) aktiviert werden können.

## Revendications

1. Dispositif pour déterminer un angle optimum pour l'exploration d'imprimés à l'aide d'un capteur (5) sur lequel les imprimés (1) sont projetés au moyen d'un système optique (4), caractérisé en ce qu'il comporte un capteur (5) présentant un grand nombre de bandes parallèles Si (6) en matièrephotosensible qui peuvent émettre des signaux $S'_i$ qui correspondent respectivement à l'intensité de la lumière réfléchie par le secteur en forme de bande correspondant de l'imprimé, des moyens (10, 11) pour produire ces signaux $\Delta j$ correspondant respectivement à la différence des signaux émis par des bandes regroupées en paire, les bandes formant une paire étant séparées chaque fois par au moins une autre bande, des moyens (12, 13) pour former des valeurs fonctionnelles

$$f(\Delta j) = \sum_{K=0}^{N} c_K \mid \Delta j^K \mid$$

pour chacun des signaux différentiels $\Delta j$, N et $c_K$ étant des constantes prédéterminées, et des moyens (17) pour accumuler toutes les valeurs fonctionnelles $f(\Delta j)$, et des moyens (30) à l'aide desquels le capteur (5) et l'imprimé (1) peuvent être orientés l'un vers l'autre.

2. Dispositif selon la revendication 1, caractérisé en ce qu'il comporte un générateur de signaux angulaires (29) qui émet des signaux angulaires correspondant à la position angulaire du capteur (5) par rapport à son axe de référence (32), un circuit comparateur (21) qui délivre un signal de commande tant que le signal qui lui est envoyé par les moyens (17) accumulant les valeurs fonctionnelles $f(\Delta j)$ croît et par un registre (25), relié au circuit comparateur (21) et au générateur de signaux angulaires (29), dans lequel sont introduits des signaux angulaires tant que le signal de commande venant du comparateur (21) est présent.

3. Dispositif selon la revendication 1, caractérisé par le fait qui les bandes formant une paire sont séparées chaque fois par une autre bande.

4. Dispositif selon la revendication 1, caractérisé par le fait que les moyens formant la valeur fonctionnelle comportent un circuit d'élévation au carré.

5. Dispositif selon la revendication 1, caractérisé en ce que les bandes $S_i$ sont réunies en groupes A, B, C, D, les bandes $S_{i+4x}$ étant reliées entre elles, avec i=1, 2, 3, 4 pour, les groupes de bandes A, B, C, D respectivement et avec X=0, 1, 2, 3, etc....

6. Dispositif selon la revendication 1, caractérisé en ce que les bandes photosensibles peuvent être activées, de façon successive, individuellement ou par groupe, au moyen d'un multiplexeur (44).

## Claims

1. Device for determining the optimum scanning angle of printed documents comprising a sensor (5) on which the documents (1) are projected by means of an optical system (4), characterized in that the sensor (5) consists of a plurality of parallel stripes $S_i$ (6) of light-sensitive material that generate signals $S'_i$ proportional to the intensity of the light reflected from the corresponding stripe-shaped sector of the document, and by means (10, 11) for generating signals $\Delta_j$ that correspond to the difference of the signals that are provided by pairs of stripes, where stripes forming a pair are separated by at least one other stripe, by means (12, 13) for forming function values

$$f(\Delta_j) = \sum_{K=0}^{N} c_K \mid \Delta_j{}^K \mid$$

for each of the difference signals $\Delta_j$, N and $c_K$ being predetermined constants, by means (17) for accumulating all said function values $f(\Delta_j)$, and by means (30) for turning the sensor (5) and the document (1) relative to each other.

2. A device as claimed in claim 1, characterized by an angle indicator (29) transmitting angle signals indicative of the angle between the sensor (5) and a reference axis (32), by a comparator (21) generating a control signal whenever the amplitude of the signal provided by the accumulating means (17) exceeds every previously reached value, and by a register (25) that is connected to the comparator (21) and to the angle indicator (29) and into which angle signals are written as long as the control signal from the comparator (21) is present.

3. A device as claimed in claim 1, characterized in that the stripes forming a pair are separated by one other stripe.

4. A device as claimed in claim 1, characterized in that the means employed to form the function values is a squaring circuit.

5. A device as claimed in claim 1, characterized in that the stripes $S_i$ are combined to groups of stripes A, B, C, D such that stripes $S_{i+4x}$ are interconnected, with $i=1, 2, 3, 4$ for the groups A, B, C, D, respectively, and with $x=0, 1, 2, 3$ etc.

6. A device as claimed in claim 1, characterized in that the light-sensitive stripes are, individually or in groups, time-sequentially energized via a multiplexor (44).

0 020 897

FIG. 1

FIG. 2

FIG. 3

FIG. 4

FIG. 5

FIG. 6